# EUROPEAN PATENT SPECIFICATION

(11) **EP 1 047 867 B1**
(45) Date of publication and mention of the grant of the patent: **12.03.2003**
(21) Application number: 98967154.0
(22) Date of filing: 14.12.1998
(51) Int. Cl.: F02C 9/26

(54) **FORCE BALANCED PROPORTIONAL BYPASS VALVE**
KRAFTAUSGEGLIECHENES PROPORTIONAL-BYPASSVENTIL
SOUPAPE DE BY-PASS PROPORTIONNELLE ET A FORCE EQUILIBREE

(30) Priority: 12.12.1997 US 989654
(43) Date of publication of application: 02.11.2000
(73) Proprietor: AlliedSignal Inc., Morristown, New Jersey 07962-2245 (US)
(72) Inventor: FUTA, Paul W. Jr., North Liberty, IN 46554 (US); PERKEY, Russell C., Granger, IN 46530 (US)
(74) Representative: Haley, Stephen
(86) International application number: US9826564
(87) International publication number: WO99030020

(56) References cited:
- EP-A- 0 274 833
- US-A- 2 989 975
- US-A- 3 106 934

## Description

The present invention relates generally to methods and apparatus for fuel flow control and more particularly to a fuel bypass valve which diverts fuel from a fuel pump outlet in an attempt to maintain a constant pressure drop across a fuel metering valve located downstream of the fuel pump. In particular, the bypass valve of the present invention compensates for imbalances caused by changes in the fuel flow rate through the bypass valve or caused by the pressure drop across the bypass valve to more closely maintain the pressure differential across the metering valve constant.

In aircraft fuel control systems, it is common to control the head or pressure differential across a fuel system metering valve by diverting part of the output from a fuel pump back to the inlet of that fuel pump. In such known systems, the pressure differential across the metering valve may, for example, be applied to a spring loaded diaphragm. That diaphragm may be coupled to a bypass valve and if the pressure differential across the metering valve becomes too large, the diaphragm moves so as to open the bypass valve and spill some of the fuel from the outlet back to the pump inlet. Similar systems employing a spring biased piston coupled to a bypass valve arrangement are also known. The mechanism which senses the pressure differential across the metering valve may be a separate component or may be an integral part of the bypass valve.

With such known bypass valves, if the bypass orifice opens further to divert greater quantities of fuel, the piston or diaphragm must move against the force of the bias spring. The spring is deformed increasing its restorative force. When the piston or diaphragm again achieves equilibrium, the forces on opposite diaphragm or piston sides are again equal, but the pressure differential is not the same as it was since one of the pressures is now being supplemented by a greater spring force. Other factors such as Bernoulli forces created by the fuel flow may also contribute to this problem. Thus, flow unbalance on the piston of a forces act to close the valve. In order to counteract these forces, the regulated pressure drop across the metering valve must increase resulting in an inaccurate control of metering head. It is highly desirable to minimize or eliminate the variations from constant metering valve head created by changes in bypass flow or bypass orifice pressure drop.

Matched flow grinding of the bypass valve components to direct the fuel flow along certain paths in an attempt to cause the fuel flow alone to compensate for such imbalance is known. Such measures have met with some success, but add significantly to the cost of a bypass valve.

More complex bypass valve configurations, such as providing a dual piston configuration with a pair of balanced high fuel pressure fuel inlets to either side of the low or return fuel outlet have also met with some success, but contribute significantly to the weight, complexity and cost of the bypass valve. US-A-3,106,934 and 2,989,975 disclose proportional plus integrator type bypass valves which are complex and costly.

It would also be highly desirable to minimize or eliminate the variations from constant metering valve head created by changes in bypass flow or bypass orifice pressure drop without contributing significantly to the cost or weight of the bypass valve.

The present invention overcomes the prior problems and achieves the aforementioned goals by restricting the outlet area of a bypass valve downstream of the bypass ports thus creating an intermediate fuel pressure region between the two ports. This intermediate pressure is applied against an annular area of the piston and is opposed by the pump inlet pressure. As bypassed flow increases, the counterbalancing pressure increases. Proper sizing of the piston annulus and the outlet areas provides a force on the piston essentially equal to the flow unbalance, but in the opposite direction which eliminates most head shift.

In accordance with one form the invention, a fuel bypass valve selectively diverts fuel from the outlet of the fuel pump back to the inlet of the fuel pump to maintain the fuel pressure differential between the inlet and the outlet of a variable orifice metering valve substantially constant. The valve comprises a variable size bypass orifice, a movable piston for varying the size of the bypass orifice with the movable piston being urged in a direction to open the bypass orifice by high fuel pressure from the metering valve inlet and urged in a direction to close the bypass orifice by intermediate fuel pressure from the metering valve outlet. A supplemental fuel pressure arrangement including an annular region of the piston augments the effect of the high fuel pressure to aid in moving the piston in the direction to open the bypass orifice. High fuel pressure is applied to the annular region of the piston from an annulus defined, in part, by the annular region of the piston and, in part by an annular groove in the valve housing. This annulus has the bypass orifice as an inlet and a flow restricting outlet coupled to the fuel pump inlet. The flow restricting outlet is sized so that the variable fuel pressure is substantially the same as the low fuel pressure when the bypass orifice is closed, and somewhat rises above the low fuel pressure when the bypass orifice opens.

In accordance with another aspect of the invention, a bypass valve maintains a pressure differential between a high pressure source and a monitored intermediate pressure substantially constant and includes a valve housing having an inlet port adapted to be coupled to the high pressure source, a first inner annular fluid flow region communicating with the outlet port, an outlet port adapted to be coupled to a low pressure return, a sensing port adapted to receive the intermediate pressure, and a second annular fluid flow region communicating with the sensing port. There is a movable piston disposed within the valve housing for reciprocable motion along an axis. The piston has a pair of opposed faces and a hollow interior region including first and second sets of sidewall openings. The hollow piston interior is coupled to the inlet port. The first set of sidewall openings and the first inner annular region define a variable size bypass orifice for controlling fluid flow from the inlet port to the outlet port. The second set of sidewall openings together with the second inner annular region provide a substantially unrestricted flow of fluid from the inlet port to the outlet port in "shut-down" situations. The piston includes a third set of sidewall openings for providing a controlled leakage of fluid across the piston from the inlet port to the sensing port.

The present invention comprises a bypass valve for selectively diverting fluid from a high pressure source to a low pressure return for maintaining substantially constant a pressure differential between the high pressure of the source and a monitored intermediate pressure comprising: a valve housing including an inlet adapted to be coupled to the high pressure source, a first inner annular fluid flow region communicating with an outlet adapted to be coupled to the low pressure return, a sensing inlet adapted to receive the intermediate pressure, and a second annular fluid flow region communicating with the sensing inlet; a movable piston disposed within the valve housing for reciprocable motion along an axis and having a pair of opposed faces and a hollow interior region including first and second sets of sidewall openings, the hollow interior coupled to the high pressure source inlet to receive fluid therefrom, the first set of sidewall openings cooperating with the first inner annular region to define a variable size bypass orifice for controlling fluid flow from the high pressure source inlet to the outlet, and the second set of sidewall openings cooperating with the second inner annular region to provide a substantially unrestricted flow of fluid from the high pressure source inlet to the outlet.

Figure 1 is a schematic representation of an illustrative aircraft fuel system employing the bypass valve of the present invention;

Figure 2 is a more detailed schematic representation of a fuel metering unit incorporating the invention in one form; and

Figure 3 is a cross-sectional view of one implementation of a displacement compensated proportional bypass valve.

Corresponding reference characters indicate corresponding parts throughout the several views of the drawing.

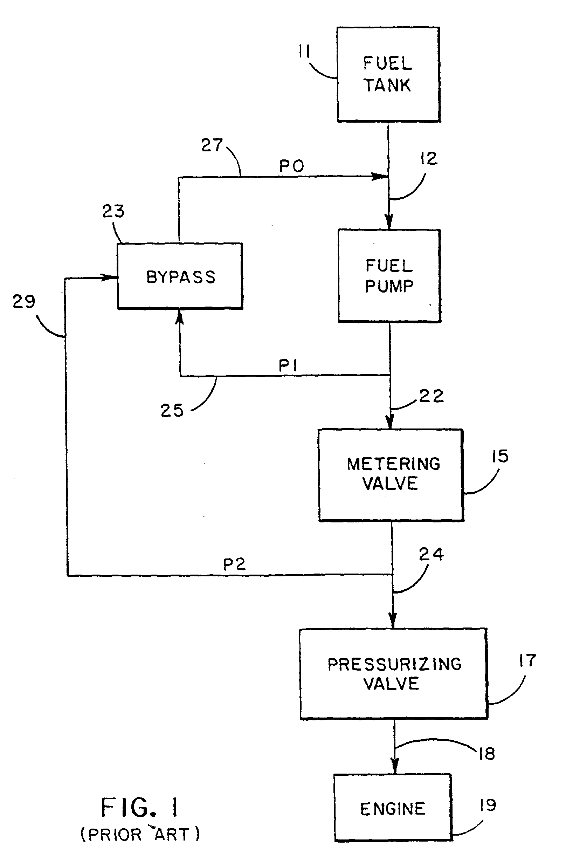

In Figure 1, an illustrative aircraft fuel supply system includes a supply tank 11 from which fuel is fed by pump 13 to a variable orifice metering valve 15 and through a pressurizing valve 17 to an engine 19. The pressure differential or head P2 - P1 is supplied to a bypass valve 23 by lines or inlets 25 and 29. The pressurizing valve 17 maintains a reference pressure level P2 on the downstream side 24 of the metering valve 15 so that the bypass valve 23 may selectively divert fuel from line 25 back through outlet or line 27 to the inlet or line 12 of the fuel pump 13 to maintain a constant head or pressure drop across the metering valve 15.

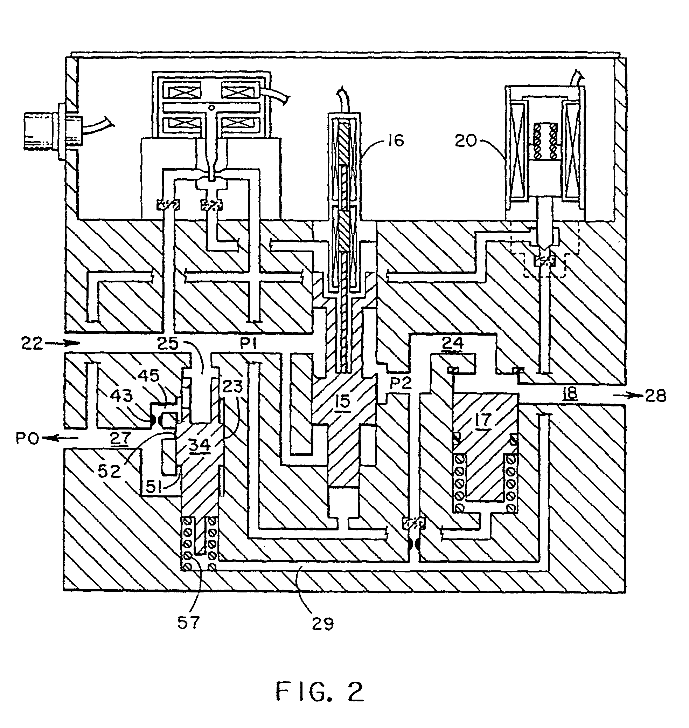

A fuel control system incorporating the features of Figure 1 is shown in Figure 2. Here the incoming fuel at pump outlet or line line 22 at pressure P1 passes to the metering valve 15. A sensor 16 provides an electrical indication of the metering valve orifice for control purposes. The metering valve outlet or line 24 supplies P2 pressure fuel to the pressurizing valve 17 and that fuel passes by way of line 18 to the engine 19 as indicated by arrow 28. P2 pressure fuel is also supplied by sensing line 29 to the bypass valve 23. The proportional bypass valve 23 diverts fuel back to low pressure return line 27 at pressure P0 to maintain the desired pressure differential across metering valve 15.

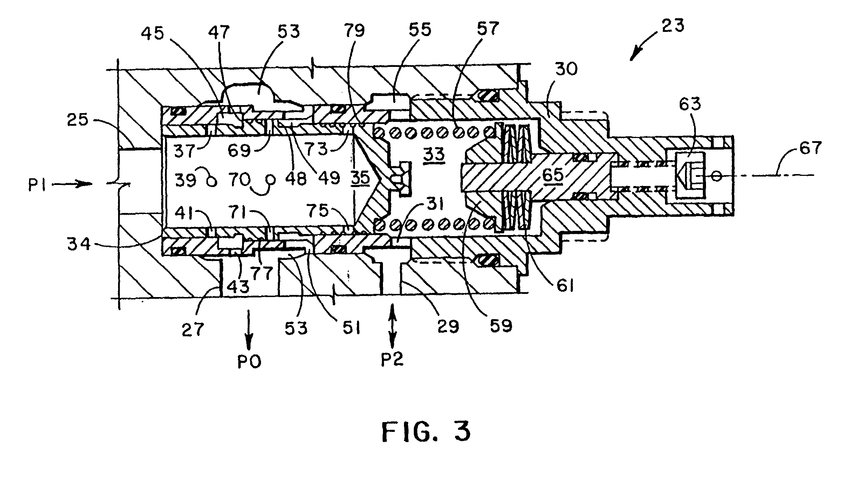

Figure 2 also includes a shutoff/overspeed solenoid valve 20 shown in the "run" or closed position. In a "shut-off" condition, the solenoid valve 20 functions to vent P2 pressure from line 29 to P0 pressure and from one side of piston 34 of the bypass valve 23. High pressure P1 is still acting on the other face of piston 34 and the piston moves to the extreme open (downward as viewed in Figure 2, rightward as viewed in Figure 3) position allowing direct fuel flow from the hollow piston interior to the outlet port 52 by way of the piston sidewall aperture and to return line 27. In this position, P1 pressure in inlet line 25 is vented to P0 pressure, lowering P1 pressure to P0 pressure. This low P1 presure condition causes pressurizing valve 17 to close, shutting off fuel flow through line 18 to the engine 19. The details of bypass valve 23 are better seen in Figure 3.

In Figure 3, bypass valve 23 comprises a valve housing 30 including an inlet line 25 which is adapted to be coupled to the high pressure P1 source. The housing includes first 53 and second 55 annular fluid flow paths surrounding the movable piston member 34. There is an outlet line 27 connected to the annular flow path 53 and adapted for low P0 pressure return. Finally, there is a sensing line 29 coupled to the annular flow path 55 and adapted to receive the intermediate pressure P2 from an outlet of the metering valve 15. A movable piston 34 is reciprocably supported in housing 30 for movement back and forth along axis 67 and has one piston face acted upon by pressure in cavity 33 while the other piston face receives pressure from cavity 35. In its leftmost position as viewed, the piston 34 substantially blocks any fuel flow from the inlet fine 25 to the outlet line 27. In the rightmost piston position, fuel may flow freely through openings 69, 70 and 71 from the hollow piston interior 35, supplementing flow through openings 37, 39 and 41 that is restricted by orifice 43. The outward flow is through annular fluid flow path 53 and the return line 27. This extreme piston position corresponds to the "shut-off" condition discussed in conjunction with Figure 2.

Piston 34 also has a range of intermediate positions in which high pressure fluid in the hollow piston interior 35 is applied to one piston face to urge the piston toward the extreme open position while intermediate pressure fluid in chamber 33 supplied from sensing line 29 by way of apertures such as 31 is applied to the opposite piston face to,urge the piston toward the minimum flow, closed position, or no bypass condition. Since the fluid pressure force urging the piston toward the right or open extreme position is greater than the fuel pressure tending to close the valve, the piston 34 is also urged toward the left by a helical reference spring 57. Spring 57 is compressed between the piston 34 and a spring retainer 59. Retainer 59 is supported by an adjustment plug 65. The initial compression of the reference spring 57 is set by an adjustment screw 63. A bi-metal disk group 61 controls the spacing between retainer 59 and adjustment plug 65 and provides additional spring compression as the system warms to offset reductions in fuel specific gravity and loss of spring force due to heating. These intermediate piston positions allow a controlled bypassing of fluid from the source or inlet line 25 to the return or outlet line 27 for maintaining the pressure differential substantially constant.

Piston 34 has a hollow interior region or cavity 35 which communicates with the inlet line 25. The cavity 35 is essentially the interior of a cylindrical shell or piston skirt and includes a plurality of sidewall openings. The first set of openings 37, 39 and 41 cooperate with the annular fluid flow or counterbalancing force region 45 to define the bypass orifice. Note that there are actually several different holes forming this aperture. Hence, "aperture" or "orifice" as used herein includes single or multiple openings. The sidewall openings 37, 39 and 41 are staggered and of various sizes to achieve the desired variable size bypass orifice, dynamic response and bypass flow for a given application.

The piston skirt includes a second set of sidewall openings such as 73 and 75 which appear to be without purpose. There are a number of pressure balance grooves such as 77 and 79 in the piston periphery. Since the pressure in cavity 35 is slightly greater than that in cavity 33, there will be a slight leakage from apertures 73 and 75 by way of grooves such as 79 into cavity 33. This may be easily compensated for or calibrated out since the pressure difference is the desired constant pressure differential across the metering valve. Were these apertures absent, leakage would be from the relatively high variable pressure cavity 33 to the low pressure return annulus 53. This leakage would be uncontrolled and not easily compensated for.

The piston skirt includes a third set of sidewall openings 69, 70, 71 which are effective only in the wide open extreme position to provide a substantially unrestricted flow of fuel from the high pressure source or inlet line 25 to the low pressure return line or outlet port 27 by way of the annulus 49 and port 51.

As the bypass aperture opens further and bypass flow increases, spring 57 is compressed further and supplies a greater restorative force to the piston 34. Hence, the pressure differential between cavities 35 and 33 increases. To compensate for this and other unbalance conditions such as flow or Bernoulli forces, the counterbalancing force region 45 receives a variable fluid pressure for supplying a variable counterbalancing force to the piston 34 to urge the piston toward the extreme open position. The counterbalancing force varies to compensate for the variable force applied to the piston by the spring 57 as the piston moves. Thus, supplemental fuel pressure augments the rightward or opening force on piston 34 by applying a pressure to the annular region 45 within the bypass valve defined in part by an annular area 47 of the movable piston member 34. Annular region 45 has the bypass orifice 37, 39, 41 as an inlet and the flow restricting outlet including orifice 43 (which may comprise several openings) coupled to the fuel pump inlet by line 27. The flow restricting outlet is sized so that the supplemental or variable fuel pressure applied to the annular surface 47 is substantially the same as the low fuel pressure when the bypass orifice 37, 39, 41 is closed, and is somewhat above the low fuel pressure when the bypass orifice opens. P0 pressure is also applied to the annular surface 48 by way of annuli 49 and port 51. Since P0 is slightly below the pressure in the restricted outlet annular region 45, there is a net pressure differential augmenting the inlet pressure in chamber 35 and balancing the unbalance forces on the piston.

## Claims

1. A fuel control system for supplying fuel with low fuel pressure from a fuel supply (11) to an inlet (12) of a fuel pump (13) and fuel with a high fuel pressure from an outlet (22) of the fuel pump (13) to an engine (19) comprising a variable orifice metering valve (15) having an inlet (22) for receiving high pressure fuel from the fuel pump outlet (22) and an outlet (24) for supplying fuel to the engine (19) at a pressure intermediate the low and high fuel pressures, and a fuel bypass valve (23) for diverting selectively fuel from the outlet (22) of the fuel pump (13) back to the inlet (12) of the fuel pump (13) to maintain substantially constant a fuel pressure differential between the inlet (22) and the outlet (24) of the metering valve (15), the fuel bypass valve (23) comprising a variable size bypass orifice (37,39, 41), a movable member (34) for varying the size of the bypass orifice (37, 39, 41), the movable member (34) being urged in a direction to open the bypass orifice by high fuel pressure from the metering valve inlet (22) and urged in a direction to close the bypass orifice by intermediate fuel pressure from the metering valve outlet (24), and supplemental fuel pressure means (45, 47, 48, 49, 51) for augmenting the effect of the high fuel pressure to aid in moving the movable member (34) in the direction to open the bypass orifice (37, 39, 41), **characterized in that** the movable member (34) comprises a reciprocable piston (34), and the fuel bypass valve (23) further comprising a helical spring (57) engaging the piston (34) for urging the piston (34) in the direction to close the bypass orifice (37, 39, 41), the helical spring (57) being axially compressed as the piston (34) moves in the direction to open the bypass orifice (37, 39, 41) with increasing force applied to the piston (34) by the helical spring (57) being substantially the same as increasing force supplied by the supplemental fuel pressure means (45, 47, 48, 49, 51).

2. The fuel control system of Claim 1, **characterized in that** the supplemental fuel pressure means (45, 47, 48, 49, 51) comprises an annular region (45) within the bypass valve (23) defined in part by an annular area of the piston (34) and having the bypass orifice (37, 39, 41), an inlet (25) and a flow restricting outlet (43) communicating with the inlet (12) of the fuel pump (13).

3. The fuel control system of Claim 2, **characterized in that** the flow restricting outlet (43) is sized so that supplemental fuel pressure is substantially the same as the low fuel pressure when the bypass orifice (37, 39, 41) is closed, and is somewhat above the low fuel pressure when the bypass orifice (37, 39, 41) opens.

4. The fuel control system of Claim 2, **characterized in that** the bypass valve (23) comprises a valve housing (30) including first and second annular fluid flow paths surrounding the piston (34) with the first annular fluid flow path forming a portion of said annular region (45) and the second annular fluid flow path communicating with said flow restricting outlet (43) and the inlet (12) of the fuel pump (13), and the piston (34) having a pair of opposed faces, one piston face being exposed to high fuel pressure from the inlet (22) of the metering valve (15) so as to be urged in a direction to open the bypass orifice (37, 39, 41) and the other face being exposed to intermediate fuel pressure from the metering valve outlet (24) so as to be urged in a direction to close the bypass orifice (37, 39, 41), the piston (34) being disposed within the valve housing (30) for reciprocable motion along an axis and including a generally hollow cylindrical piston sidewall portion having a first set of sidewall openings (37, 39, 41) cooperating with the first annular flow path to define the bypass orifice (37, 39, 41), and a second set of sidewall openings (69, 70, 71) cooperating with the second annular fluid flow path to provide an unrestricted fuel flow path to divert fuel flow from the outlet (22) of the pump back (13) to the inlet (12) of the pump (13).

5. The fuel control system of Claim 4, **characterized in that** the valve (23) further includes a third set of sidewall openings (73, 75) for providing a controlled fuel leakage between the piston (34) and the housing (30) from high fuel pressure to intermediate fuel pressure.

6. A bypass valve (23) for diverting selectively fluid from a high pressure source to a low pressure return for maintaining substantially constant a pressure differential between the high pressure of the source and a monitored intermediate pressure comprising:
a valve housing (30) including an inlet (25) adapted to be coupled to the high pressure source, an outlet (27) adapted to be coupled to the low pressure return, and a sensing inlet (29) adapted to receive the intermediate pressure;
a movable piston (34) having a pair of opposed faces and disposed within the valve housing (30) for reciprocable motion along an axis, the piston (34) having one extreme position allowing maximum flow of fluid from the high pressure source inlet to the outlet (27), another minimum flow extreme position substantially blocking any fluid flow from the high pressure source inlet (25) to the outlet (27), and a range of intermediate positions allowing a controlled bypassing of fluid from the source to the return for maintaining the pressure differential substantially constant;
means (35) within the housing for supplying high pressure fluid from the high pressure source (25) inlet to one piston face to urge the piston (34) toward the one extreme position; **characterized in that** the valve (23) further comprises
means (31) within the housing (30) for supplying intermediate pressure fluid from the sensing inlet (29) to another piston face to urge the piston (34) toward the minimum flow extreme position;
spring means (57) within the housing (30) engaging and applying a variable force to the piston (34) to urge the piston toward the minimum flow extreme position; and
a counterbalancing force region (45) associated with the piston (34) and receiving a variable fluid pressure for supplying a variable counterbalancing force to the piston (34) to urge the piston toward the one extreme position, the counterbalancing force varying to compensate for the variable force applied to the piston (34) by the spring means (57) as the piston moves.

7. The bypass valve of Claim 6, for use in a fuel control system for supplying fuel from a fuel tank (11) to an engine, **characterized in that** the difference between high fuel pressure and monitored intermediate fuel pressure comprises the pressure differential across a variable orifice fuel metering valve (15).

8. The bypass valve of Claim 6, **characterized in that** the piston (34) has a hollow interior region (35) communicating with the high pressure source inlet (25) and includes a plurality of sidewall openings (37, 39, 41), and the housing (30) includes an inner annular region (53) communicating with the outlet (27), the sidewall openings (37, 39, 41) and annular region (53) cooperating to define a variable size bypass orifice (37, 39, 41).

9. The bypass valve of Claim 8, **characterized in that** the piston (34) includes a second set of sidewall openings (73, 75) for providing a controlled leakage of fluid across the piston (34) from the high pressure fluid to the intermediate pressure fluid.

10. The bypass valve of Claim 9, **characterized in that** the piston (34) includes a third set of sidewall openings (69, 70, 71) effective only in the one extreme position to provide a substantially unrestricted flow of fluid from the high pressure source to the low pressure return.

11. The bypass valve of Claim 9, **characterized in that** the counterbalancing force also varies to compensate for flow forces affecting the movable piston (34).

12. A bypass valve (23) for selectively diverting fluid from a high pressure source to a low pressure return for maintaining substantially constant a pressure differential between the high pressure of the source and a monitored intermediate pressure comprising:
a valve housing (30) including an inlet (25) adapted to be coupled to the high pressure source, a first inner annular fluid flow region (45) communicating with an outlet (27) adapted to be coupled to the low pressure return, a sensing inlet (29) adapted to receive the intermediate pressure, and a second annular fluid flow region (49) communicating with the outlet (27);
a movable piston (34) disposed within the valve housing (30) for reciprocable motion along an axis and having a pair of opposed faces and a hollow interior region (35) including first (37, 39, 41) and second (69, 70, 71) sets of sidewall openings, **characterized in that** the hollow interior (35) is coupled to the high pressure source inlet (25) to receive fluid therefrom, the first set of sidewall openings (37, 39, 41) cooperating with the first inner annular region (45) to define a variable size bypass orifice (37, 39, 4) for controlling fluid flow from the high pressure source inlet (25) to the outlet (27), and the second set of sidewall openings (69, 70, 71) cooperating with the second inner annular region (49) to provide a substantially unrestricted flow of fluid from the high pressure source inlet (25) to the outlet (27).

13. The bypass valve of Claim 12, **characterized in that** the piston (34) includes a third set of sidewall openings (73, 75) for providing a controlled leakage of fluid across the piston (34) from the high pressure source inlet (25) to the sensing inlet (29).

14. The bypass valve of Claim 12, **characterized in that** the valve (23) further includes a counterbalancing force region (45) associated with the piston (34) and receiving a variable fluid pressure for supplying a variable counterbalancing force to the piston (34) to urge the piston (34) in a direction to increase the size of the variable bypass orifice (37, 39, 41) to compensate for variable unbalance forces applied to the piston (34).

15. The bypass valve of Claim 14, **characterized in that** the counterbalancing force region (45) comprises an annular fluid flow region (45) within the bypass valve (23) defined in part by the first inner annular region and having the bypass orifice (37, 39, 41) as an inlet and a flow restricting outlet (43) communicating with the outlet (27).

## Patentansprüche

1. Kraftstoffregelungssystem zur Speisung von Kraftstoff mit niedrigem Kraftstoffdruck von einer Kraftstoffversorgung (11) an einen Eingang (12) einer Kraftstoffpumpe (13) und von Kraftstoff mit hohem Kraftstoffdruck von einem Ausgang (22) der Kraftstoffpumpe (13) an einen Motor (19), das ein Dosierventil (15) mit variabler Öffnung, das einen Eingang (22) zum Empfang von Hochdruck-Kraftstoff vom Kraftstoffpumpenausgang (22) und einen Ausgang (24) zur Speisung des Motors (19) mit einem Kraftstoff besitzt, dessen Druck zwischen dem niedrigen und dem hohen Kraftstoffdruck liegt, und ein Kraftstoff-Bypassventil (23) aufweist, um Kraftstoff wahlweise vom Ausgang (22) der Kraftstoffpumpe (13) an den Eingang (12) der Kraftstoffpumpe (13) zurückzulenken, um eine im wesentlichen konstante Kraftstoffdruckdifferenz zwischen dem Eingang (22) und dem Ausgang (24) des Dosierventils (15) aufrechtzuerhalten, wobei das Kraftstoff-Bypassventil (23) eine Bypassöffnung (37, 39, 41) mit variabler Größe, ein bewegliches Element (34) zum Verändern der Größe der Bypassöffnung (37, 39, 41), wobei das bewegliche Element (34) durch hohen Kraftstoffdruck vom Eingang (22) des Dosierventils in Richtung des Öffnens der Bypassöffnung angetrieben wird und durch mittleren Kraftstoffdruck vom Ausgang (24) des Dosierventils in Richtung des Schließens der Bypassöffnung angetrieben wird, und zusätzliche Kraftstoffdruckmittel (45, 47, 48, 49, 51) aufweist, um die Wirkung des hohen Kraftstoffdrucks zur Unterstützung der Bewegung des beweglichen Elements (34) in Richtung des Öffnens der Bypassöffnung (37, 39, 41) zu erhöhen, **dadurch gekennzeichnet, daß** das bewegliche Element (34) einen Hubkolben (34) umfasst, und daß das Kraftstoff-Bypassventil (23) weiter eine Spiralfeder (57) aufweist, die den Kolben (34) betätigt, um den Kolben (34) in Richtung des Schließens der Bypassöffnung (37, 39, 41) anzutreiben, wobei die Spiralfeder (57) axial zusammengedrückt wird, wenn der Kolben (34) sich in Richtung des Öffnens der Bypassöffnung (37, 39, 41) bewegt, wobei die von der Spiralfeder (57) auf den Kolben (34) ausgeübte, zunehmende Kraft im wesentlichen die gleiche ist wie die zunehmende Kraft, die von den zusätzlichen Kraftstoffdruckmitteln (45, 47, 48, 49, 51) geliefert wird.

2. Kraftstoffregelungssystem nach Anspruch 1, **dadurch gekennzeichnet, daß** das zusätzliche Kraftstoffdruckmittel (45, 47, 48, 49, 51) einen ringförmigen Bereich (45) innerhalb des Bypassventils (23) aufweist, der zum Teil von einem ringförmigen Bereich des Kolbens (34) definiert wird und die Bypassöffnung (37, 39, 41) enthält, wobei ein Eingang (25) und ein Durchflußdrosselausgang (43) mit dem Eingang (12) der Kraftstoffpumpe (13) in Verbindung stehen.

3. Kraftstoffregelungssystem nach Anspruch 2, **dadurch gekennzeichnet, daß** der Durchflußdrosselausgang (43) so bemessen ist, daß der zusätzliche Kraftstoffdruck im wesentlichen der gleiche ist wie der niedrige Kraftstoffdruck, wenn die Bypassöffnung (37, 39, 41) geschlossen ist, und geringfügig über dem niedrigen Kraftstoffdruck liegt, wenn die Bypassöffnung (37, 39, 41) sich öffnet.

4. Kraftstoffregelungssystem nach Anspruch 2, **dadurch gekennzeichnet, daß** das Bypassventil (23) ein Ventilgehäuse (30) aufweist, das erste und zweite ringförmige Fluidflußwege aufweist, die den Kolben (34) umgeben, wobei der erste ringförmige Fluidflußweg einen Abschnitt des ringförmigen Bereichs (45) bildet und der zweite ringförmige Fluidflußweg mit dem Durchflußdrosselausgang (43) und dem Eingang (12) der Kraftstoffpumpe (13) in Verbindung steht, und der Kolben (34) ein Paar von gegenüberliegenden Seiten aufweist, wobei eine Kolbenseite hohem Kraftstoffdruck vom Eingang (22) des Dosierventils (15) ausgesetzt ist, um in eine Richtung angetrieben zu werden, um die Bypassöffnung (37, 39, 41) zu öffnen, und die andere Seite einem Kraftstoff-Zwischendruck vom Ausgang (24) des Dosierventils ausgesetzt ist, um in eine Richtung angetrieben zu werden, um die Bypassöffnung (37, 39, 41) zu schließen, wobei der Kolben (34) innerhalb des Ventilgehäuses (30) angeordnet ist, für eine Hubbewegung entlang einer Achse, und einen allgemein hohlen zylindrischen Kolbenseitenwandabschnitt aufweist, der einen ersten Satz von Seitenwandöffnungen (37, 39, 41), die mit dem ersten ringförmigen Flußweg zusammenwirken, um die Bypassöffnung (37, 39, 41) zu definieren, und einen zweiten Satz von Seitenwandöffnungen (69, 70, 71) besitzt, die mit dem zweiten ringförmigen Fluidflußweg zusammenwirken, um einen uneingeschränkten Kraftstoffflußweg zu liefern, um den Kraftstofffluß vom Ausgang (22) der Pumpe (13) zum Eingang (12) der Pumpe (13) zurückzuleiten.

5. Kraftstoffregelungssystem nach Anspruch 4, **dadurch gekennzeichnet, daß** das Ventil (23) weiter einen dritten Satz von Seitenwandöffnungen (73, 75) aufweist, um ein gesteuertes Kraftstoffleck zwischen dem Kolben (34) und dem Gehäuse (30) von hohem Kraftstoffdruck zu mittlerem Kraftstoffdruck zu liefern.

6. Bypassventil (23) zum wahlweisen Umlenken von Fluid von einer Hochdruckquelle zu einem Niederdruck-Rückfluß, um eine Druckdifferenz zwischen dem hohen Druck der Quelle und einem überwachten mittleren Druck im wesentlichen konstant zu halten, das folgendes aufweist:
ein Ventilgehäuse (30), das einen Eingang (25), der zur Verbindung mit der Hochdruckquelle ausgeführt ist, einen Ausgang (27), der zur Verbindung mit dem Niederdruck-Rückfluß ausgeführt ist, und einen Meßeingang (29), der zur Aufnahme des mittleren Drucks ausgeführt ist, aufweist,
einen beweglichen Kolben (34), der ein Paar von gegenüberliegenden Seiten aufweist und im Ventilgehäuse (30) für eine Hubbewegung entlang einer Achse angeordnet ist, wobei der Kolben (34) eine Endstellung, die einen maximalen Fluidfluß vom Hochdruckquelleneingang zum Ausgang (27) erlauben, eine andere Endstellung mit minimalem Fluß, die im wesentlichen jeden Fluidfluß vom Hochdruckquelleneingang (25) zum Ausgang (27) blockiert, und eine Reihe von Zwischenstellungen hat, die eine gesteuerte Fluidumlenkung von der Quelle zum Rückfluß erlauben, um die Druckdifferenz im wesentlichen konstant zu halten,
Mittel (35) innerhalb des Gehäuses, um ein Hochdruckfluid vom Hochdruckquelleneingang (25) zu einer Kolbenseite zu liefern, um den Kolben (34) zu der einen Endstellung anzutreiben, **dadurch gekennzeichnet, daß** das Ventil (23) weiter folgendes aufweist:
Mittel (31) innerhalb des Gehäuses (30), um ein Zwischendruckfluid vom Meßeingang (29) zu einer anderen Kolbenseite zu liefern, um den Kolben (34) in die Endstellung mit minimalem Fluß anzutreiben,
Federmittel (57) innerhalb des Gehäuses (30), die den Kolben (34) betätigen und eine veränderliche Kraft an ihn anlegen, um den Kolben in die Endstellung mit minimalem Fluß anzutreiben, und
einen Ausgleichskraftbereich (45), der dem Kolben (34) zugeordnet ist und einen veränderlichen Fluiddruck empfängt, um eine veränderliche Ausgleichskraft an den Kolben (34) zu liefern, um den Kolben in die eine Endstellung anzutreiben, wobei die Ausgleichskraft variiert, um die veränderliche Kraft zu kompensieren, die bei der Bewegung des Kolbens von den Federmitteln (57) auf den Kolben (34) ausgeübt wird.

7. Bypassventil nach Anspruch 6 zur Verwendung in einem Kraftstoffregelungssystem zur Kraftstoffzufuhr von einem Kraftstofftank (11) zu einem Motor, **dadurch gekennzeichnet, daß** der Unterschied zwischen hohem Kraftstoffdruck und überwachtem Kraftstoff-Zwischendruck die Druckdifferenz über ein Kraftstoff-Dosierventil (15) mit veränderlicher Öffnung umfasst.

8. Bypassventil nach Anspruch 6, **dadurch gekennzeichnet, daß** der Kolben (34) einen hohlen Innenbereich (35) hat, der mit dem Hochdruckquelleneingang (25) in Verbindung steht, und mehrere Seitenwandöffnungen (37, 39, 41) besitzt, und das Gehäuse (30) einen inneren ringförmigen Bereich (53) enthält, der mit dem Ausgang (27) in Verbindung steht, wobei die Seitenwandöffnungen (37, 39, 41) und der ringförmige Bereich (53) so zusammenwirken, daß sie eine Bypassöffnung (37, 39, 41) variabler Größe definieren.

9. Bypassventil nach Anspruch 8, **dadurch gekennzeichnet, daß** der Kolben (34) einen zweiten Satz von Seitenwandöffnungen (73, 75) aufweist, um über den Kolben (34) ein gesteuertes Fluidleck vom Hochdruckfluid zum Zwischendruckfluid zu liefern.

10. Bypassventil nach Anspruch 9, **dadurch gekennzeichnet, daß** der Kolben (34) einen dritten Satz von Seitenwandöffnungen (69, 70, 71) aufweist, die nur in der einen Endstellung wirksam sind, um einen im wesentlichen uneingeschränkten Fluidfluß von der Hochdruckquelle zum Niederdruck-Rückfluß zu liefern.

11. Bypassventil nach Anspruch 9, **dadurch gekennzeichnet, daß** die Ausgleichskraft auch variiert, um Flußkräfte zu kompensieren, die den beweglichen Kolben (34) beeinflussen.

12. Bypassventil (23) zum wahlweisen Umlenken von Fluid von einer Hochdruckquelle zu einem Niederdruck-Rückfluß, um eine Druckdifferenz zwischen dem hohen Druck der Quelle und einem überwachten Zwischendruck im wesentlichen konstant zu halten, das folgendes aufweist:
ein Ventilgehäuse (30), das einen Eingang (25), der zur Verbindung mit der Hochdruckquelle ausgeführt ist, einen ersten inneren ringförmigen Fluidflußbereich (45), der mit einem Ausgang (27) in Verbindung steht, der zur Verbindung mit dem Niederdruck-Rückfluß ausgeführt ist, einen Meßeingang (29), der zur Aufnahme des Zwischendrucks, ausgeführt ist, und einen zweiten ringförmigen Fluidflußbereich (49), der mit dem Ausgang (27) in Verbindung steht, aufweist,
einen beweglichen Kolben (34), der im Ventilgehäuse (30) für eine Hubbewegung entlang einer Achse angeordnet ist und ein Paar von gegenüberliegenden Seiten und einen hohlen Innenbereich (35) aufweist, der erste (37, 39, 41) und zweite (69, 70, 71) Sätze von Seitenwandöffnungen besitzt, **dadurch gekennzeichnet, daß** der hohle Innenraum (35) mit dem Hochdruckquelleneingang (25) verbunden ist, um von dort Fluid zu empfangen, wobei der erste Satz von Seitenwandöffnungen (37, 39, 41) mit dem ersten inneren ringförmigen Bereich (45) zusammenwirkt, um eine Bypassöffnung (37, 39, 41) veränderlicher Größe zu definieren, um den Fluidfluß vom Hochdruckquelleneingang (25) zum Ausgang (27) zu steuern, und der zweite Satz von Seitenwandöffnungen (69, 70, 71) mit dem zweiten inneren ringförmigen Bereich (49) zusammenwirkt, um einen im wesentlichen uneingeschränkten Fluidfluß vom Hochdruckquelleneingang (25) zum Ausgang (27) zu liefern.

13. Bypassventil nach Anspruch 12, **dadurch gekennzeichnet, daß** der Kolben (34) einen dritten Satz von Seitenwandöffnungen (73, 75) aufweist, um über den Kolben (34) ein gesteuertes Fluidleck vom Hochdruckquelleneingang (25) zum Meßeingang (29) zu liefern.

14. Bypassventil nach Anspruch 12, **dadurch gekennzeichnet, daß** das Ventil (23) weiter einen Ausgleichskraftbereich (45) aufweist, der dem Kolben (34) zugeordnet ist und einen variablen Fluiddruck empfängt, um eine variable Ausgleichskraft an den Kolben (34) zu liefern, um den Kolben (34) in eine Richtung anzutreiben, um die veränderliche Bypassöffnung (37, 39, 41) zu vergrößern, um an den Kolben (34) angelegte, variable Ungleichgewichtskräfte zu kompensieren.

15. Bypassventil nach Anspruch 14, **dadurch gekennzeichnet, daß** der Ausgleichskraftbereich (45) einen ringförmigen Fluidflußbereich (45) innerhalb des Bypassventils (23) aufweist, der zum Teil vom ersten inneren ringförmigen Bereich definiert wird und der die Bypassöffnung (37, 39, 41) als Eingang und einen mit dem Ausgang (27) in Verbindung stehenden, durchflußdrosselnden Ausgang (43) hat.

## Revendications

1. Système de commande d'alimentation de carburant pour alimenter le carburant à basse pression provenant d'une alimentation de carburant (11) à une entrée (12) d'une pompe à carburant (13) et le carburant à haute pression provenant d'une sortie (22) de la pompe à carburant (13) à un moteur (19) comprenant une vanne de dosage à orifice variable (15) ayant une entrée (22) pour recevoir le carburant à haute pression provenant de la sortie de la pompe à carburant (22) et une sortie (24) pour alimenter le carburant au moteur (19) à une pression intermédiaire entre les basse et haute pressions, et une soupape de by-pass de carburant (23) pour détourner de façon sélective le carburant provenant de la sortie (22) de la pompe à carburant (13) de retour à l'entrée (12) de la pompe à carburant (13) afin de maintenir sensiblement constant un différentiel de pression de carburant entre l'entrée (22) et la sortie (24) de la vanne de dosage (15), la soupape de by-pass (23) comprenant un orifice de by-pass à taille variable (37, 39, 41), un élément mobile (34) pour faire varier la taille de l'orifice de by-pass (37, 39, 41), l'élément mobile (34) étant forcé dans une direction pour ouvrir l'orifice de by-pass par la haute pression de carburant provenant de l'entrée de la vanne de dosage (22) et forcé dans une direction pour fermer l'orifice de by-pass par la pression intermédiaire de carburant provenant de la sortie de la vanne de dosage (24), et un moyen de pressurisation supplémentaire de carburant (45, 47, 48, 49, 51) pour augmenter l'effet de la haute pression de carburant pour aider le déplacement de l'élément mobile (34) dans la direction qui ouvre l'orifice de by-pass (37, 39, 41), **caractérisé en ce que** l'élément mobile (34) comprend un piston à mouvement alternatif (34), et la soupape de by-pass de carburant (23) comprend en outre un ressort hélicoïdal (57) s'engageant sur le piston (34) pour forcer le piston (34) dans la direction qui ferme l'orifice de by-pass (37, 39, 41), le ressort hélicoïdal (57) étant comprimé dans le sens axial en même temps que le piston (34) se déplace dans la direction qui ouvre l'orifice de by-pass (37, 39, 41) une force croissante étant appliquée sur le piston (34) par le ressort hélicoïdal (57) étant sensiblement la même que la force croissante appliquée par le moyen de pressurisation supplémentaire de carburant (45, 47, 48, 49, 51).

2. Système de commande d'alimentation de carburant de la revendication 1, **caractérisé en ce que** le moyen de pressurisation supplémentaire de carburant (45, 47, 48, 49, 51) comprend une région annulaire (45) dans la soupape de by-pass (23) définie en partie par une zone annulaire du piston (34) et comportant l'orifice de by-pass (37, 39, 41), une entrée (25) et une sortie à restriction d'écoulement (43) communiquant avec l'entrée (12) de la pompe à carburant (13).

3. Système de commande d'alimentation de carburant de la revendication 2, **caractérisé en ce que** la sortie à restriction d'écoulement (43) est dimensionnée de telle façon que la pression supplémentaire de carburant est sensiblement la même que la basse pression d'alimentation de carburant quand l'orifice de by-pass (37, 39, 41) est fermé, et est quelque peu au-dessus de la basse pression d'alimentation de carburant quand l'orifice de by-pass (37, 39, 41) s'ouvre.

4. Système de commande d'alimentation de carburant de la revendication 2, **caractérisé en ce que** la soupape de by-pass (23) comprend un logement de soupape (30) incluant un premier et un deuxième chemins annulaires d'écoulement de fluide entourant le piston (34) avec le premier chemin annulaire d'écoulement de fluide formant une partie de ladite région annulaire (45) et le deuxième chemin annulaire d'écoulement de fluide communiquant avec ladite sortie à restriction d'écoulement (43) et l'entrée (12) de la pompe à carburant (13), et le piston (34) ayant une paire de faces opposées, une face de piston étant exposée à la haute pression provenant de l'entrée (22) de la vanne de dosage (15) de façon à être forcée dans une direction qui ouvre l'orifice de by-pass (37, 39, 41) et l'autre face étant exposée à la pression intermédiaire de carburant provenant de la sortie de la vanne de dosage (24) de façon à être forcée dans une direction qui ferme l'orifice de by-pass (37, 39, 41), le piston (34) étant disposé à l'intérieur du logement de soupape (30) pour accomplir un mouvement alternatif le long d'un axe et comprenant une partie de paroi latérale cylindrique de piston généralement creuse ayant un premier jeu d'ouvertures de paroi latérale (37, 39, 41) coopérant avec le premier chemin annulaire d'écoulement de fluide pour définir l'orifice de by-pass (37, 39, 41), et un second jeu d'ouvertures de paroi latérale (69, 70, 71) coopérant avec le deuxième chemin annulaire d'écoulement de fluide pour fournir un chemin d'écoulement de carburant sans restriction pour détourner l'écoulement de carburant provenant de la sortie (22) de la pompe (13) de retour à l'entrée (12) de la pompe (13).

5. Système de commande d'alimentation de carburant de la revendication 4, **caractérisé en ce que** la soupape (23) comprend en outre un troisième jeu d'ouvertures de paroi latérale (73, 75) pour fournir une fuite contrôlée de carburant entre le piston (34) et le logement (30) de la haute pression de carburant à la pression intermédiaire de carburant.

6. Soupape de by-pass (23) pour détourner de façon sélective le fluide provenant d'une source de haute pression à un retour à basse pression pour maintenir sensiblement constant un différentiel de pression entre la haute pression de la source et une pression intermédiaire contrôlée comprenant :
un logement de soupape (30) comprenant une entrée (25) adaptée pour être accouplée à la source de haute pression, une sortie (27) adaptée pour être accouplée au retour de basse pression, et une entrée à détection (29) adapté pour recevoir la pression intermédiaire ;
un piston mobile (34) ayant une paire de faces opposées et disposé à l'intérieur du logement de soupape (30) pour accomplir un mouvement alternatif le long d'un axe, le piston (34) ayant une position extrême permettant l'écoulement maximum de fluide provenant de l'entrée de la source de haute pression à la sortie (27), une autre position extrême à écoulement minimum bloquant sensiblement tout écoulement de fluide provenant de l'entrée (25) de la source de haute pression à la sortie (27) et une gamme de positions intermédiaires permettant un by-pass contrôlé du fluide allant de la source au retour pour maintenir le différentiel de pression substantiellement constant ;
un moyen (35) prévu dans le logement pour alimenter le fluide à haute pression provenant de l'entrée de la source de haute pression (25) à une face de piston pour forcer le piston (34) vers une position extrême ; **caractérisé en ce que** la soupape (23) comprend en outre :
un moyen (31) prévu dans le logement (30) pour alimenter le fluide à pression intermédiaire provenant de l'entrée à détection (29) à une autre face de piston pour forcer le piston (34) vers la position extrême donnant l'écoulement minimum ;
un moyen de ressort (57) prévu dans le logement (30) qui s'engage et applique sur le piston (34) une force variable pour forcer le piston vers la position extrême donnant l'écoulement minimum ; et
une région de force de contrepoids (45) associée avec le piston (34) et recevant une pression variable de fluide pour appliquer une force variable de contrepoids au piston (34) pour forcer le piston vers la position extrême, la force de contrepoids variant pour compenser la force variable appliquée au piston (34) par le moyen de ressort (57) alors que le piston se déplace.

7. Soupape de by-pass de la revendication 6, pour l'utilisation dans un système de commande d'alimentation de carburant pour alimenter le carburant provenant d'un réservoir de carburant (11) à un moteur, **caractérisé en ce que** la différence entre la haute pression de carburant et la pression intermédiaire contrôlée comprend le différentiel de pression à travers une vanne de dosage de carburant à orifice variable (15).

8. Soupape de by-pass de la revendication 6, **caractérisée en ce que** le piston (34) a une région intérieure creuse (35) communiquant avec l'entrée de la source de haute pression (25) et comprend une pluralité d'ouvertures de paroi latérale (37, 39, 41), et le logement (30) comprend une région intérieure annulaire (53) communiquant avec la sortie (27), les ouvertures de paroi latérale (37, 39, 41) et la région annulaire (53) coopérant pour définir un orifice de by-pass de taille variable (37, 39, 41).

9. Soupape de by-pass de la revendication 8, **caractérisée en ce que** le piston (34) comprend un deuxième jeu d'ouvertures de paroi latérale (73, 75) pour fournir une fuite contrôlée de fluide à travers le piston (34) de la haute pression de fluide à la pression intermédiaire de fluide.

10. Soupape de by-pass de la revendication 9, **caractérisée en ce que** le piston (34) comprend un troisième jeu d'ouvertures de paroi latérale (69, 70, 71) actif seulement dans la position extrême pour fournir un écoulement de fluide sensiblement sans restriction de la source de haute pression au retour de basse pression.

11. Soupape de by-pass de la revendication 9, **caractérisée en ce que** la force de contrepoids varie également pour compenser les forces d'écoulement affectant le piston mobile (34).

12. Soupape de by-pass (23) pour détourner de façon sélective le fluide d'une source de haute pression à un retour de basse pression pour maintenir sensiblement constant un différentiel de pression entre la haute pression de la source et une pression intermédiaire contrôlée comprenant :
un logement de soupape (30) comprenant une entrée (25) adaptée pour être accouplée à la source de haute pression, une première région intérieure annulaire d'écoulement de fluide (45) communiquant avec une sortie (27) adaptée pour être accouplée au retour de basse pression, une entrée à détection (29) adaptée pour recevoir la pression intermédiaire, et une deuxième région annulaire d'écoulement de fluide (49) communiquant avec la sortie (27) ;
un piston mobile (34) disposé dans le logement de soupape (30) pour accomplir un mouvement alternatif le long d'un axe et ayant une paire de faces opposées et une région intérieure creuse (35) comprenant un premier (37, 39, 41) et un deuxième (69, 70, 71) jeu d'ouvertures de paroi latérale, **caractérisé en ce que** l'intérieur creux (35) est accouplé à l'entrée de source de haute pression (25) pour recevoir le fluide de celle-ci, le premier jeu d'ouvertures de paroi latérale (37, 39, 41) coopérant avec la première région annulaire (45) pour définir un orifice de by-pass à taille variable (37, 39, 41) pour contrôler l'écoulement de fluide allant de l'entrée de la source de haute pression (25) à la sortie (27), et le second jeu d'ouvertures de paroi latérale (69, 70, 71) coopérant avec la deuxième région annulaire intérieure (49) pour fournir un écoulement de fluide sensiblement sans restriction de l'entrée de la source de haute pression (25) à la sortie (27).

13. Soupape de by-pass de la revendication 12, **caractérisée en ce que** le piston (34) comprend un troisième jeu d'ouvertures de paroi latérale (73, 75) pour fournir une fuite contrôlée de fluide à travers le piston (34) de l'entrée de la source de haute pression (25) à l'entrée à détection (29).

14. Soupape de by-pass de la revendication 12, **caractérisée en ce que** la soupape (23) comprend en outre une région de force de contrepoids (45) associée avec le piston (34) et recevant une pression variable de fluide pour appliquer une force variable de contrepoids au piston (34) pour forcer le piston (34) dans une direction pour accroître la taille de l'orifice de by-pass à taille variable (37, 39, 41) pour compenser les forces variables de déséquilibre appliquées au piston (34).

15. Soupape de by-pass de la revendication 14, **caractérisée en ce que** la région de force de contrepoids (45) comprend une région annulaire d'écoulement de fluide (45) à l'intérieur de la soupape de by-pass (23) définie en partie par la première région annulaire et ayant l'orifice de by-pass (37, 39, 41) en tant qu'entrée et une sortie à restriction d'écoulement (43) communiquant avec la sortie (27).
